# EUROPÄISCHE PATENTANMELDUNG

(11) **EP 0 961 393 A1**
(43) Veröffentlichungstag der Anmeldung: **01.12.1999**
(21) Anmeldenummer: 98810495.6
(22) Anmeldetag: 28.05.1998
(51) Int. Cl.: H02K 41/035, B65H 59/22

(54) **Linearmotor für eine Textilmaschine sowie Vorrichtung mit einem Linearmotor und Webmaschine mit dieser Vorrichtung**

(71) Anmelder: SULZER RÜTI AG, CH-8630 Rüti (CH)
(72) Erfinder: de Jager, Godert, Dr., 8604 Volketswil (CH); Markward, Dietmar, 8630 Rüti (CH)
(74) Vertreter: Sulzer Management AG

(57) **Zusammenfassung**

Der Linearmotor enthält einen Stator (1), der ein Magnetfeld erzeugt, einen Anker (2), der im Magnetfeld angeordnet ist und zwei flexible Lagerteile (3), die parallel zueinander so angeordnet sind, dass der mit den Lagerteilen verbundene Anker relativ zum Stator beweglich ist.

## Beschreibung

Die Erfindung betrifft einen Linearmotor für eine Textilmaschine gemäss dem Oberbegriff des Anspruches 1 sowie eine vorrichtung zur Beeinflussung eines Bewegungsablaufes eines Fadens mit einem Linearmotor und eine Webmaschine mit einer solchen Vorrichtung.

In der US-A-4,998,420 ist ein Linearmotor für eine Webmaschine beschrieben, der einen Stator mit einer ferromagnetischen Platte und einem Permanentmagnet mit unterschiedlicher Polarität sowie einen Anker mit einer Wicklung aufweist. Der Stator ist ortsfest angeordnet und der Anker ist auf einer ortsfesten Achse drehbar gelagert.

Bei dieser Ausführung des Linearmotors erweist sich die auftretende Lagerreibung als auch das Lagerspiel als Nachteil.

Der Erfindung liegt die Aufgabe zugrunde einen Linearmotor zu verbessern.

Diese Aufgabe wird erfindungsgemäss mit den Merkmalen des Anspruches 1 gelöst.

Die mit der Erfindung erzielbaren Vorteile sind im Wesentlichen darin zu sehen, dass der Anker eine Bewegung in einer Ebene ausführt, dass die Bewegung hysteresefrei und in den Lagern absolut spielfrei ist und dass die vom Anker ausgeübte Kraft direkt proportional zur Stromstärke ist.

Die Seitenwände des Spulenkörpers können an der Aussenseite mit einer Kupferschicht versehen werden oder aus Aluminium hergestellt sein. Dies hat den Vorteil, dass der Permanentmagnet bzw. das Magnetpaar in der Kupferschicht Wirbelströme erzeugt, welche die Bewegung des Ankers dämpfen.

Eine Vorrichtung zur Beeinflussung des Bewegungsablaufes mindestens eines Fadens oder Bandes mit einem Linearmotor ist erfindungsgemäss durch die Merkmale des Anspruches 8 gekennzeichnet.

Der Vorteil dieser Vorrichtung ist in der Vielzahl der Anwendungen in Textilmaschinen zu sehen.

Eine Webmaschine mit einer Vorrichtung ist dadurch gekennzeichnet, dass die Vorrichtung als Fadenbremse im Laufweg des Schussfadens angeordnet ist.

Nachfolgend wird die Erfindung anhand der beiliegenden Zeichnungen erläutert.

Es zeigen:
- Fig. 1 und 2: Eine Ausführungsform eines erfindungsgemässen Linearmotors im Schnitt;
- Fig. 3: eine schematische Darstellung einer zweiten Ausführungsform eines Linearmotors;
- Fig. 4: eine erste Ausführungsform einer erfindungsgemässen Vorrichtung;
- Fig. 5: eine zweite Ausführungsform einer erfindungsgemässen Vorrichtung in schematischer Darstellung;
- Fig. 6: eine dritte Ausführungsform einer Vorrichtung in schematischer Darstellung;
- Fig. 7: eine vierte Ausführungsform einer Vorrichtung in schematischer Darstellung;
- Fig. 8: ein Schnitt entlang der Linie VIII-VIII in Fig. 7;
- Fig. 9: eine fünfte Ausführungsform einer Vorrichtung in schematischer Darstellung;
- Fig. 10: eine sechste Ausführungsform einer Vorrichtung in schematischer Darstellung;
- Fig. 11: eine siebente Ausführungsform einer vorrichtung in schematischer Darstellung;
- Fig. 12: eine achte Ausführungsform einer vorrichtung in schematischer Darstellung;
- Fig. 13: eine dritte Ausführungsform eines erfindungsgemässen Linearmotors als Teil einer Fadenbremse im Schnitt;
- Fig. 14: eine vierte Ausführungsform eines erfindungsgemässen Linearmotors als Teil einer Fadenbremse im Schnitt;
- Fig. 15: eine Ausführungsform einer Feder im Linearmotor gemäss Fig. 14;
- Fig. 16: eine zehnte Ausführungsform einer vorrichtung in schematischer Darstellung;
- Fig. 17: eine elfte Ausführungsform einer Vorrichtung in schematischer Darstellung;
- Fig. 18: eine zwölfte Ausführungsform einer Vorrichtung in schematischer Darstellung und
- Fig. 19: eine fünfte Ausführungsform eines Linearmotors als Teil einer Fadenbremse im Schnitt.

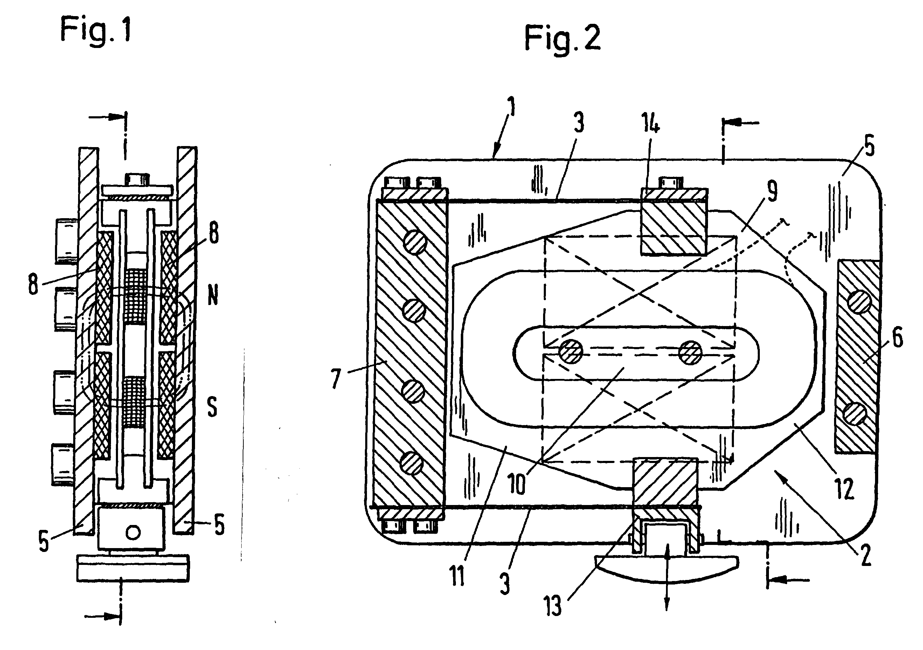

Es wird auf die Figuren 1 und 2 Bezug genommen. Der Linearmotor weist einen Stator 1, einen Anker 2 und zwei Blattfedern 3 auf, welche als Lagerteile für den Anker dienen. Der Stator enthält zwei Platten 5 aus ferromagnetischen Material, zwei Abstandsstücke 6, 7 welche die Platten verbinden und auf Abstand halten und zwei Permanentmagnetpaare 8 mit unterschiedlicher Polarität, die auf der Innenseite der Platten befestigt sind. Der Anker 2 enthält einen Spulenkörper 9 mit einem Kern 10 und zwei Seitenwänden 11 aus einem nicht ferromagnetischen Material, z.B. Kunststoff; eine spule 12 sowie ein erstes Verbindungsorgan 13 und ein zweites Verbindungsorgan 14. Die Seitenwände 11 des Spulenkörpers sind mit einer Kupferschicht versehen oder aus Aluminium hergestellt sind. Die Blattfedern sind jeweils an einem Ende am Abstandsstück 7 und am anderen Ende am Verbindungsorgan 13, 14 befestigt. Die Blattfedern 3 weisen nicht dargestellte Anschlüsse für die Stromzufuhr auf und sind mit den Anschlussdrähten der Spule verbunden. Mit dieser Anordnung wird eine sichere Stromzufuhr zur Spule gewährleistet. Bei der vorstehend beschriebenen Ausführung ist der Linearmotor zwischen den Lagerteilen 3 angeordnet. Es ist aber auch möglich den Linearmotor ausserhalb der Lagerteile anzuordnen.

Die Funktionsweise eines Linearmotors ist bekannt und wird daher nicht näher erläutert. Bei erregter Spule wird der Anker 2 ausgelenkt, wobei durch die Blattfedern 3 der Anker 2 eine Bewegung in einer Ebene ausführt. Dadurch, dass, die Seitenwände des Spulenkörpers an den aussen und den Permanentmagnetpaaren gegenüber liegenden Flächen mit z.B. einer Kupferschicht versehen sind, werden während des Betriebes Wirbelströme in der Kupferschicht erzeugt, welche die Bewegung des Ankers 2 dämpfen.

Durch die parallele Ausrichtung der Lagerteile zueinander ist es möglich, einen extrem kleinen Luftspalt zwischen Anker und Stator vorzusehen. Indem einseitig fest verankerte Blattfedern als Lagerteile verwendet werden, ergibt sich eine absolut spielfreie Lagerung.

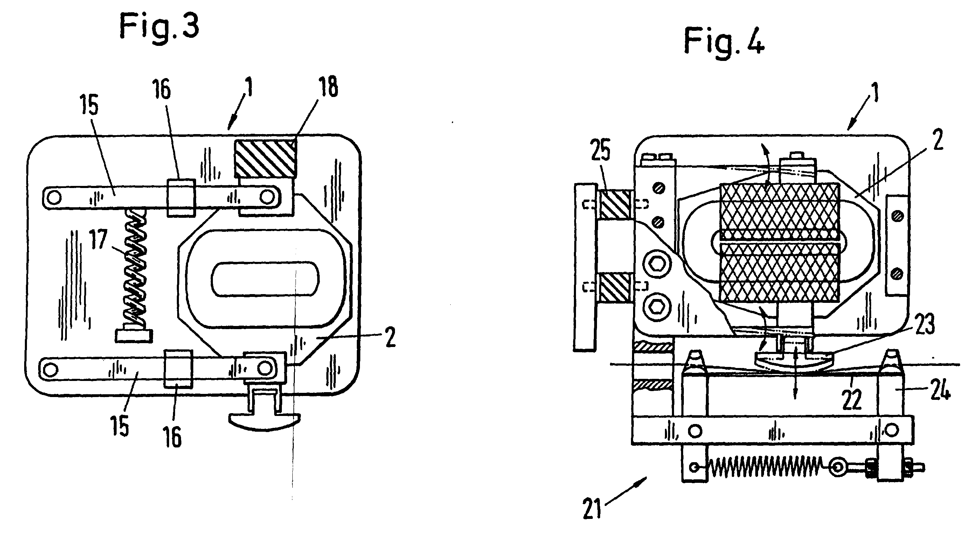

Die Fig. 3 zeigt eine andere Ausführung eines Linearmotors. Bei diesem Motor ist der Anker 2 mittels Lenker 15 am Stator 1 gelagert. An den Hebeln ist jeweils ein Führungsteil 16 angeordnet, um den Anker 2 während der Bewegung an den parallel ausgerichteten Platten des Stators spielfrei zu führen. Es kann eine Feder 17, um bei abgeschalteten bzw. umgepoltenen Motor den Anker 2 in die Grundstellung zurückzustellen und ein elastischer Teil 18 vorgesehen werden, um eine Dämpfung durch einen weicheren Anschlag zu erzielen.

Die Fig. 4 zeigt eine Fadenbremse 21 mit einem Linearmotor. Die Fadenbremse enthält einen ortsfesten Bremsteil 22 und einen beweglichen Bremskörper 23. Der ortsfeste Bremsteil 22 ist als Bremsband ausgebildet und nachgiebig in Haltern 24 angeordnet. Der bewegliche Bremskörper 23 ist mit dem Anker 2 verbunden. Die Fadenbremse ist mit dem Linearmotor verbunden und mittels elastische Elemente 25 an einer Webmaschine befestigt, um die am Maschinengestell auftretenden Schwingungen zu dämpfen.

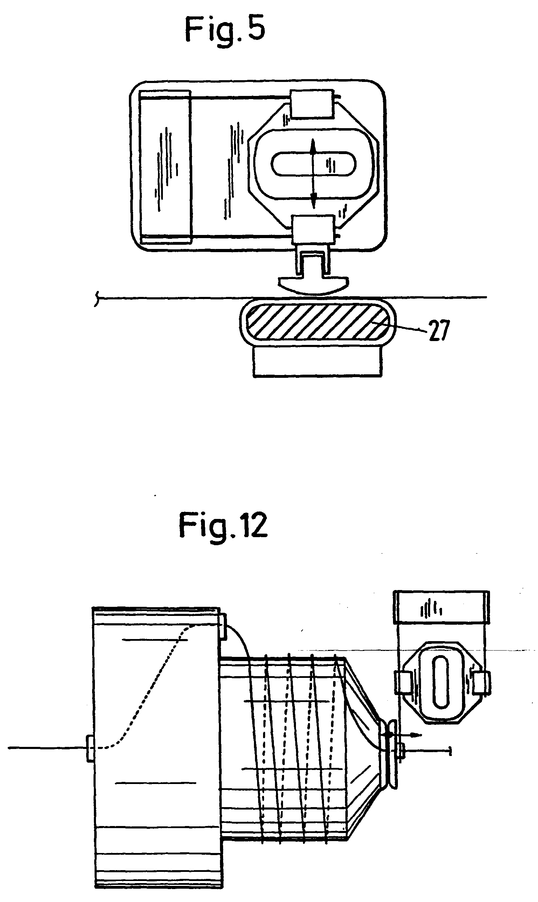

Bei der in Fig. 5 gezeigten Ausführung der Fadenbremse ist am ortsfesten Bremsteil ein elastischer Körper 27 befestigt, um eine progressive Federung zu erzielen.

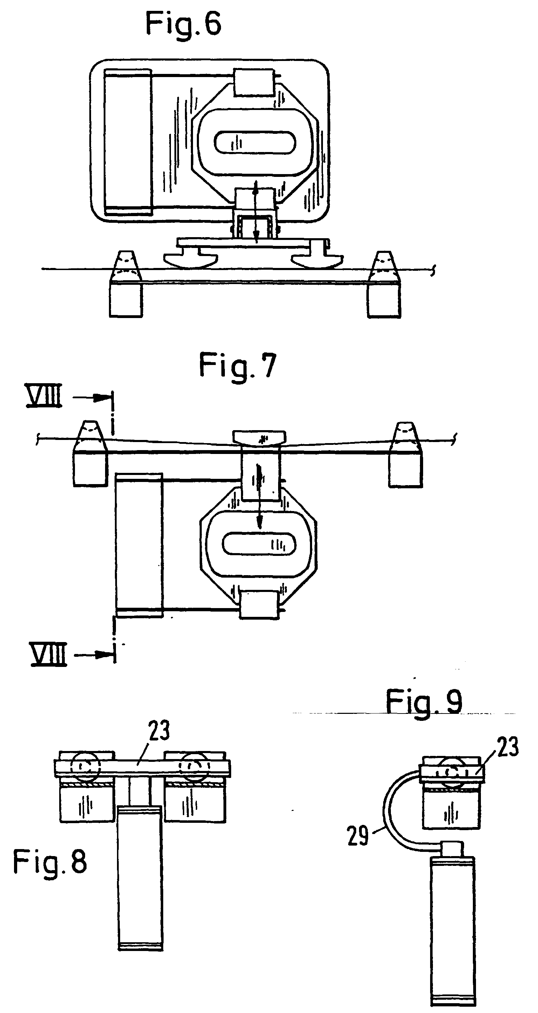

Die Fig. 6 zeigt eine Ausführung einer Fadenbremse mit zwei Bremskörper, so dass ein Faden an zwei stellen gebremst wird. Damit kann einerseits eine Verstärkung der Bremswirkung auf den Faden erzielt werden, anderseits kann die spezifische Bremsbelastung auf den Faden verteilt werden.

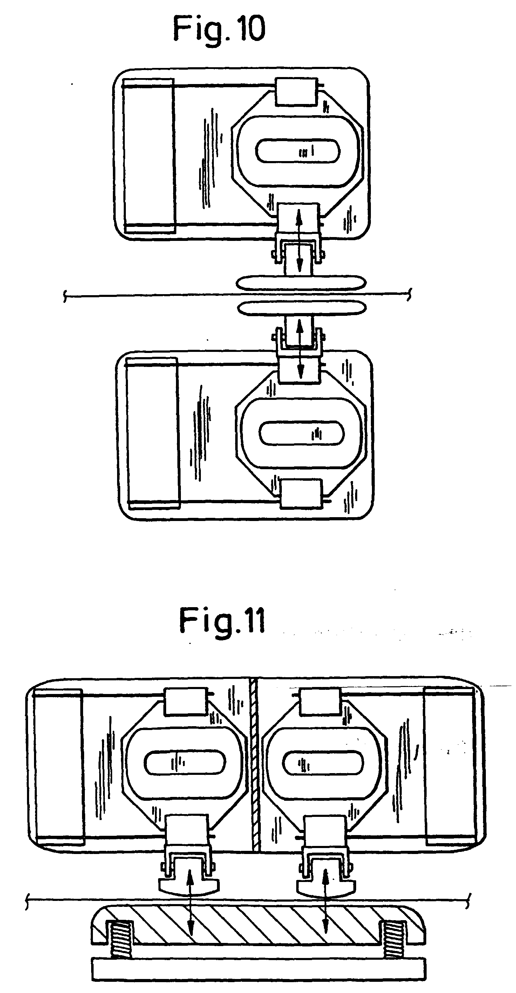

Es wird auf die Figuren 7 bis 9 Bezug genommen. Die Figuren 7 und 8 zeigen eine Fadenbremse für zwei parallel verlaufende Fäden mit jedoch nur einem Linearmotor, wobei der Bremskörper 23 T-förmig ausgebildet ist und auf die darunter angeordneten, parallel ausgerichteten Fadenbremsen einwirkt. Die Fig. 9 zeigt eine Fadenbremse für einen Faden, wobei der Bremskörper hakenförmig ausgebildet ist, um die Bremskraft symmetrisch auf das Bremsteil zu richten. Um das Einführen eines Fadens in die Fadenbremse zu erleichtern, ist bei diesen Ausführungen der Linearmotor unterhalb des Bremsbandes angeordnet. Der Bremskörper ist mittels eines Bügels 29 mit dem Anker des Linearmotors verbunden.

Die Figuren 10 bis 11 zeigen Ausführungen von Fadenbremsen mit jeweils zwei, voneinander unabhängig steuerbaren Linearmotoren. Mit diesen Ausführungen ergeben sich weitere Möglichkeiten für einerseits eine Bremskraftverstärkung und andererseits Aufteilung der spezifischen Bremsbelastung auf den Faden. Ferner können die Reaktionszeiten für z.B. ein phasenweises Bremsen des Fadenlaufes durch wechselweise Beaufschlagung verkürzt werden.

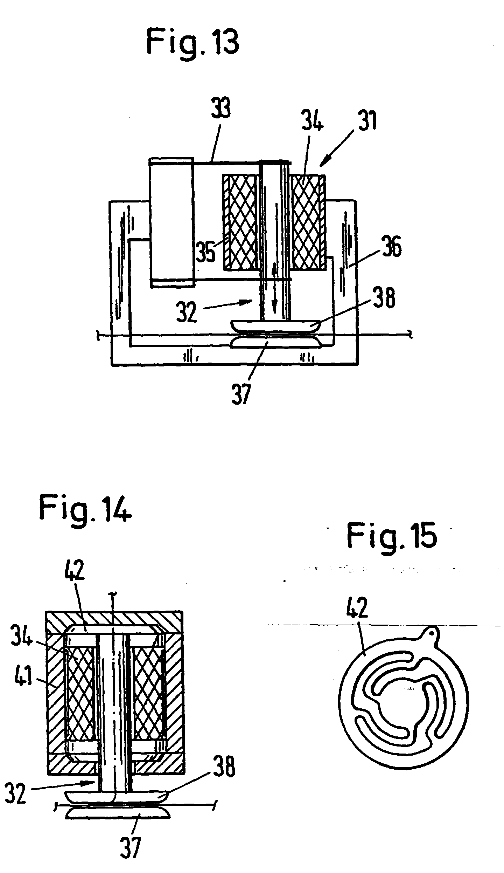

Fig. 12 zeigt eine Anwendung des Linearmotors in Verbindung mit einer, an der Fadenabzugsseite eines Fadenspeichers angeordneten bekannten Tellerfadenbremse. Hierbei ist der bewegliche Bremsteller an einem verlängerten Lagerteil des Linearmotors befestigt.

Es wird auf die Figuren 13 bis 15 Bezug genommen. Die Fig. 13 zeigt einen Linearmotor, der einen Stator 31, einen Anker 32 und zwei Lagerteile 33 enthält. Der Stator enthält eine Spule 34, die in einem Gehäuse 35 vorgesehen ist. Der Anker 32 ist ein Permanentmagnet, der an den Lagerteilen 33 befestigt ist. Die Lagerteile sind als Blattfedern ausgebildet. Dieser Linearmotor ist als Teil einer Fadenbremse dargestellt, die ferner einen Halter 36, einen ortsfesten Bremsteil 37 und einen Bremskörper 38 aufweist. Der Linearmotor und der ortsfeste Bremsteil sind am Halter angeordnet und der Bremskörper ist am Anker befestigt.

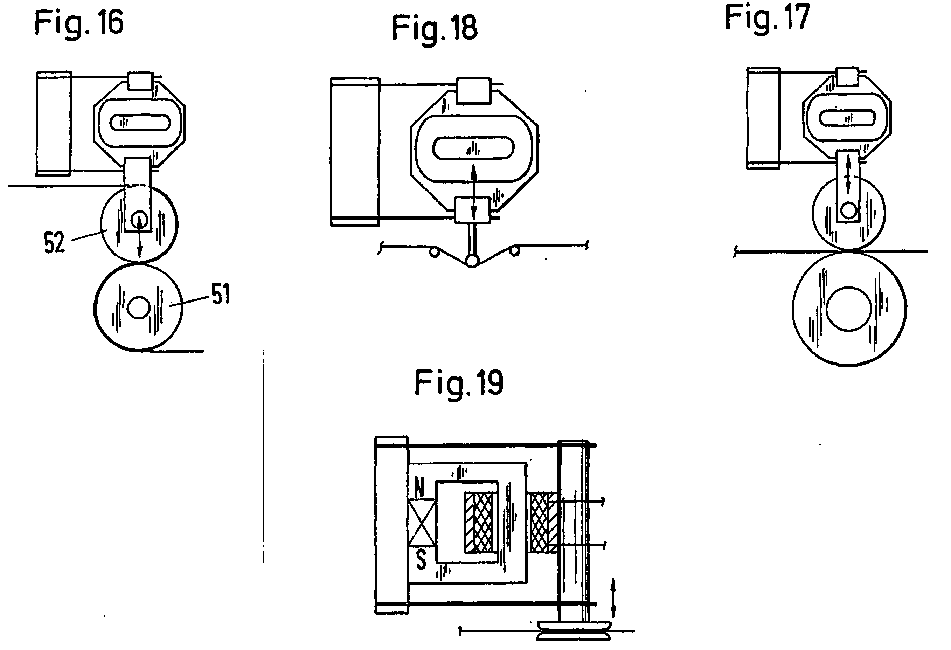

Die Fig. 14 zeigt eine vierte Ausführung eines Linearmotors, welcher im wesentlichen gleich wie der Linearmotor gemäss Fig.13 ausgebildet ist. Der wesentliche Unterschied besteht in der Ausbildung des Gehäuses 41 und der Lagerteile 42 (Fig. 15). Bei dieser Ausführung sind die Lagerteile als Ringfedern und z.B. gleichzeitig Stromanschlussleiter für die Spule ausgebildet. Der zu bremsende Faden kann in der in voller Linie dargestellten Form zwischen den Bremsorganen 37, 38 hindurchgeführt werden, oder aber radial bis zum Zentrum dieser, um axial durch eine nicht gezeigte Zentralbohrung geführt zu werden.

Es wird auf die Figuren 16 bis 19 Bezug genommen. Die Fig.16 zeigt eine Vorrichtung zur steuerbaren Förderung eines Fadens oder Bandes mit einem Linearmotor. Die vorrichtung enthält eine Förderrolle 51, welche von einem nicht dargestellten Antrieb in Drehung versetzt wird und eine Andrückrolle 52, die mit dem Linearmotor verbunden ist, wobei eine Reibungsmitnahme erzeugt wird. Bei dieser vorrichtung kann anstelle der doppelten Umlenkung eine einfache Umlenkung angewendet werden.

Die Fig. 17 zeigt eine Vorrichtung zur Beschleunigung eines Fadens mit einem Linearmotor. Diese Vorrichtung enthält eine Förderrolle 53, die von einem Motor (nicht dargestellt) angetrieben wird und eine bevorzugterweise ebenfalls angetriebenen Andrückrolle 54, die mit dem Linearmotor verbunden ist. Diese Vorrichtung kann Z.B. zur Beschleunigung eines Schussfadens zwecks Vermeidung des sogenannten Streckschlages beim Schusseintrag in einer Projektilwebmaschine als auch zur Unterstützung des Schusseintrages bei Luftwebmaschinen verwendet werden.

Die Fig. 18 zeigt eine Vorrichtung zur Auslenkung eines Fadens, um z.B. eine steuerbare Dämpfung am Ende des Schusseintrags bei z.B. Luftwebmaschinen zu erzielen.

Der Linearmotor enthält einen Stator 1, der ein Magnetfeld erzeugt, einen Anker 2, der im Magnetfeld angeordnet ist und zwei flexible Lagerteile 3, die parallel zueinander so angeordnet sind, dass der mit den Lagerteilen verbundene Anker relativ zum Stator beweglich ist.

## Patentansprüche

1. Linearmotor für eine Textilmaschine, mit einem Stator (1;31), der ein Magnetfeld erzeugt und mit einem Anker (2;32), der im Magnetfeld angeordnet ist, dadurch gekennzeichnet, dass der Anker (2;32) mittels zwei flexiblen Lagerteilen (3;33;42) gelagert ist, die parallel zueinander so angeordnet sind, dass der Anker relativ zum Stator beweglich ist.

2. Motor nach Anspruch 1, dadurch gekennzeichnet, dass die Lagerteile als Blattfedern (3;33) ausgebildet sind, die einerseits an dem Stator eingespannt und andererseits mit dem Anker verbunden sind.

3. Motor nach Anspruch 1 und 2, dadurch gekennzeichnet, dass der Stator (1) eine erste Platte (5) aus ferromagnetischen Material, die im Abstand zum Anker angeordnet ist und einen Permanentmagnet vorzugsweise Magnetpaar (8) mit unterschiedlicher Polarität aufweist, der an der Platte angeordnet sind, dass der Stator eine zweite Platte aus ferromagnetischen Material aufweist, die parallel zum und im Abstand von dem Permanentmagneten (8) angeordnet ist und dass der Anker zwischen den Platten in einer Ebene beweglich und spielfrei gelagert, angeordnet ist.

4. Motor nach Anspruch 3, dadurch gekennzeichnet, dass ein zweiter Permanentmagnet vorzugsweise Magnetpaar (8) vorgesehen ist, der an der zweiten Platte (5) angeordnet ist.

5. Motor nach einem der Ansprüche 1 bis 4, dadurch gekennzeichnet, dass der Anker (2) einen Spulenkörper (9) mit einem Kern (10) und mit Seitenwänden (11), und eine Spule (12) aufweist und dass der Spulenkörper an den Lagerteilen befestigt ist.

6. Motor nach einem der Anspruch 5, dadurch gekennzeichnet, dass der Kern (10) und/oder die Seitenteile (11) aus nicht-ferromagnetischem Material bestehen.

7. Motor nach Anspruch 5, dadurch gekennzeichnet, dass die Seitenwände (11) an der Aussenseite mit einer Kupferschicht versehen sind oder eine Beschichtung aus nicht-ferromagnetischem Material aufweisen.

8. Linearmotor nach Anspruch 1, dadurch gekennzeichnet, dass der Stator (31) eine Spule (34) aufweist und dass der Anker (32) ein Permanentmagnet oder - magnetpaar ist, der an den stirnseiten jeweils mit einem Lagerteil (33;42) verbunden ist.

9. Linearmotor nach Anspruch 1, dadurch gekennzeichnet, dass die stromzufuhr zur Spule (12), über die Lagerteile (3, 15, 33, 42) erfolgt.

10. Vorrichtung zur Beeinflussung des Bewegungsablaufs mindestens eines Fadens oder Bandes mit einem Linearmotor nach einem der Ansprüche 1 bis 7, gekennzeichnet durch mindestens ein mit dem Linearmotor verbundenes erstes Organ (23;38;52) und ein zweites Organ (22;27;37;51), das mit dem Faden oder Band in Kontakt bringbar ist und dazu bestimmt sind, den Faden oder das Band zu bremsen, zu beschleunigen oder umzulenken.

11. Vorrichtung nach Anspruch 8, gekennzeichnet durch Mittel (25) zur Dämpfung von am Einbauort erzeugten Schwingungen.

12. Textilmaschine, insbesondere Webmaschine mit einer Vorrichtung nach Anspruch 8, dadurch gekennzeichnet, dass die Vorrichtung in den Laufweg eines Schussfadens angeordnet ist.
